# EUROPÄISCHE PATENTSCHRIFT

(11) **EP 0 896 908 B1**
(45) Veröffentlichungstag und Bekanntmachung des Hinweises auf die Patenterteilung: **13.08.2003**
(21) Anmeldenummer: 98110451.6
(22) Anmeldetag: 08.06.1998
(51) Int. Cl.: B60R 21/04, B62D 25/04

(54) **Energieabsorbierende Verkleidung für eine Aufbausäule eines Kraftfahrzeuges**
Energy absorbing pad covering a pillar of an automotive vehicle
Revêtement absorbant l'énergie pour une poutrelle d'un véhicule automobile

(30) Priorität: 13.08.1997 DE 19735068
(43) Veröffentlichungstag der Anmeldung: 17.02.1999
(73) Patentinhaber: Dr.Ing.h.c. F. Porsche Aktiengesellschaft, 70435 Stuttgart (DE)
(72) Erfinder: Duepjohann, Reinhard, 70499 Stuttgart (DE); Menking, Michael, Dr., 75242 Neuhausen (DE)

(56) Entgegenhaltungen:
- EP-A- 0 676 315
- EP-A- 0 716 960
- DE-A- 3 108 759
- GB-A- 2 293 798
- GB-A- 2 308 340
- US-A- 5 163 730

## Beschreibung

Die Erfindung bezieht sich auf eine energieabsorbierende Verkleidung für eine Aufbausäule eines Kraftfahrzeuges gemäß dem Oberbegriff des Patentanspruches 1.

Aus der US-PS 5,163,730 geht eine energieabsorbierende Verkleidung für eine Aufbausäule eines Kraftfahrzeuges hervor, die sich aus einem Verkleidungsteil und einem zwischen Verkleidungsteil und Aufbausäule angeordnetem energieaufnehmenden Element zusammensetzt. Das einstückig ausgebildete profilierte energieaufnehmende Element aus Metallblech bildet mit der dahinterliegenden Aufbausäule einen geschlossenen Hohlraum und ist mit zumindest einem Schenkel direkt an der Aufbausäule festgelegt. Der andere, endseitig einen gebogenen Formverlauf aufweisende Schenkel des energieaufnehmenden Elements liegt mit seinem freien Ende befestigungslos an der Aufbausäule an. Das Verkleidungsteil stützt sich bei dieser Ausführung abschnittsweise direkt am einstückigen energieaufnehmenden Element ab und ist mit diesem über ein doppelseitiges Klebeband oder dergleichen fest verbunden.

Dieser Anordnung haftet der Nachteil an, daß durch das befestigungslose Aufliegen des zweiten Schenkels des energieaufnehmenden Elementes an der Aufbausäule das energieaufnehmende Element bei ungünstiger, d.h. schräger Beaufschlagungsrichtung seitlich ausweichen und quasi um eine Scharnierachse wegknicken kann, wodurch dann eine wesentlich geringere Energieaufnahme bei einem Kopfaufprallstoß gegeben ist. Ferner kann der frei aufliegende zweite Schenkel des energieaufnehmenden Elements im Fahrbetrieb unerwünschte Klappergeräusche verursachen. Zudem ist das lagerichtige Positionieren des energieaufnahmenden Elements an der Aufbausäule sowie der Verkleidung am energieaufnehmenden Element bei der Montage schwierig.

Die EP 0 676 315 A1 offenbart eine energieabsorbierende Verkleidung für eine Aufbausäule eines Kraftfahrzeuges gemäß dem Oberbegriff des Anspruchs 1, die an einem im Fahrgastraum liegenden Bereich der Aufbausäule vorgesehen ist und zumindest ein Verkleidungsteil und ein zwischen Verkleidungsteil und Aufbausäule angeordnetes energieaufnehmendes Element umfaßt. Das energieaufnehmende Element wird durch eine c-förmige, elastische Federstruktur aus Metall gebildet, die durch Kleben am Innenblech der Aufbausäule befestigt ist.

Aufgabe der Erfindung ist es, an einer energieabsorbierenden Verkleidung der eingangs genannten Gattung solche Vorkehrungen zu treffen, daß bei montagefreundlicher Ausbildung auch bei ungünstiger Beaufschlagungsrichtung ein seitliches Wegknicken des energieaufnehmenden Elements vermieden wird und daß zudem Klappergeräusche durch die energieabsorbierende Verkleidung im Fahrbetrieb vermieden werden.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung einer profilierten Halteschiene, die zumindest örtlich mit beiden Schenkeln des energieaufnehmenden Elements verbunden ist, auch bei ungünstiger Beaufschlagungsrichtung bei einem Kopfaufprallstoß eine wirksame Energieaufnahme erzielt wird. Durch die abschnittsweise der Außenkontur der Aufbausäule angepaßte Form der Halteschiene läßt sich diese zusammen mit dem energieaufnehmenden Element einfach an der Aufbausäule positionieren und befestigen. Klappergeräusche im Fahrbetrieb werden durch die beidseitige Halterung des energieaufnehmenden Elementes vermieden. Das Verkleidungsteil läßt sich in einfacher Weise über Steckverbindungen an der Halteschiene oder an der Aufbausäule befestigen.

Ein Ausführungsbeispiel der Erfindung ist in den Zeichnungen dargestellt und wird im folgenden näher beschrieben.

Es zeigen
- Fig. 1: eine Teilseitenansicht eines Personenkraftwagens mit einer zwischen einer Windschutzscheibe und einer Türfensterscheibe angeordneten Aufbausäule, die fahrgastraumseitig mit einer energieaufnehmenden Verkleidung versehen ist,
- Fig. 2: eine Einzelheit X der Fig. 1 in größerer Darstellung, wobei das energieraufnehmende Element und die Halteschiene der energieaufnehmenden Verkleidung dargestellt sind,
- Fig. 3: einen Schnitt nach der Linie III-III der Fig. 2 in größerer Darstellung,
- Fig. 4: einen Schnitt nach der Linie IV-IV der Fig. 2 in größerer Darstellung,
- Fig. 5: einen Schnitt nach der Linie V-V der Fig. 2 in größerer Darstellung.
- Fig. 6: eine Ansicht in Pfeilrichtung R der Fig. 3 auf das energieaufnehmende Element und die Halteschiene,
- Fig. 7: eine Explosionsdarstellung des energieaufnehmdenen Elements und der Halteschiene,
- Fig. 8: eine weitere Explosionsdarstellung, in der die Aufbausäule, die aus Halteschiene und energieaufnehmendem Element gebildete vorgefertigte Baueinheit und das Verkleidungsteil dargestellt sind und
- Fig. 9: einen Schnitt ähnlich Fig. 3, wobei hier das Verkleidungsteil an der Aufbausäule befestigbar ist.

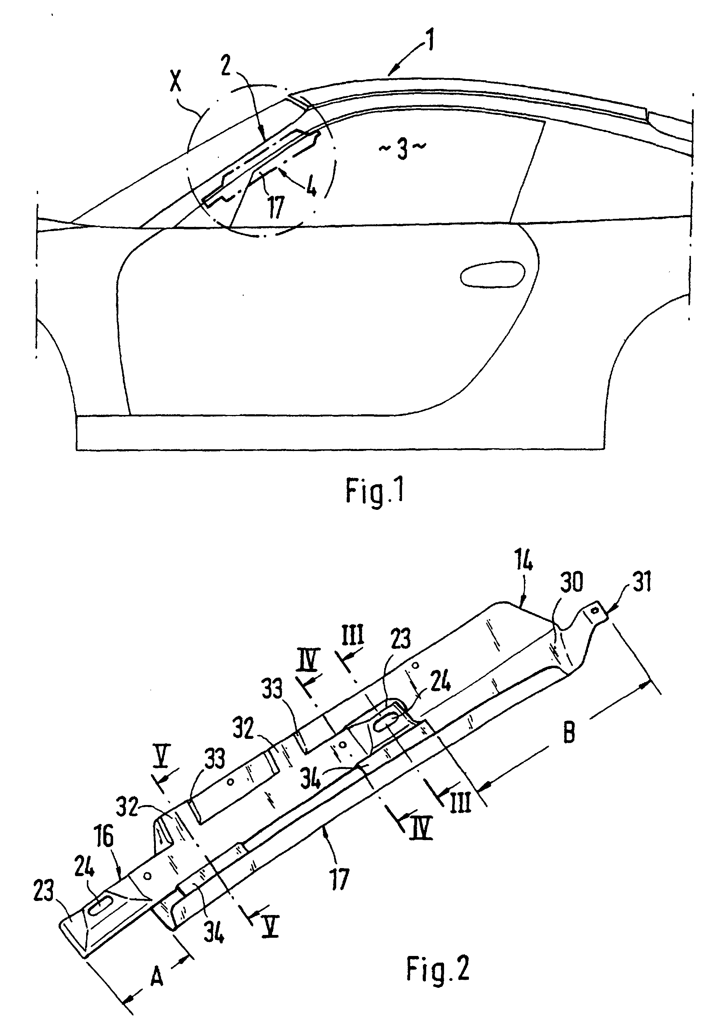

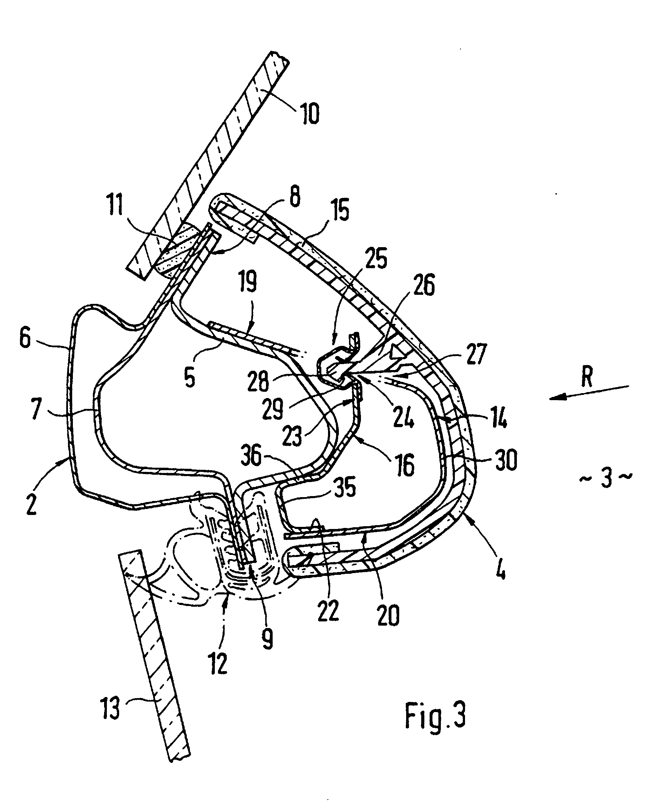

Der in Fig. 1 abschnittsweise dargestellte Personenkraftwagen 1 weist eine durch eine A-Säule gebildete Aufbausäule 2 auf, die auf der einem Fahrgastraum 3 zugekehrten Seite mit einer energieabsorbierenden Verkleidung 4 versehen ist. Durch die energieabsorbierende Verkleidung 4 werden die Aufschlagwerte eines Fahrzeuginsassen bei einem Kopfaufprall erheblich reduziert. Die Aufbausäule 2 setzt sich gemäß den Fig. 3 bis 5 zumindest aus einem profilierten Innenblech 5 und einem profilierten Außenblech 6 zusammen. Ferner kann die Aufbausäule 2 zwischen Innenblech 5 und Außenblech 6 ein zusätzliches Verstärkungsblech 7 oder ein im inneren Hohlraum der Aufbausäule 2 angerodnetes, nicht näher dargestelltes Verstärkungsrohr enthalten. Innenblech 5, Verstärkungsblech 7 und Außenblech 6 sind an Flanschen 8, 9 durch geeignete Verfahren zu einem geschlossenen Hohlträger zusammengesetzt. Der Flansch 8 dient zur Aufnahme einer Windschutzscheibe 10, die unter Vermittlung eines Klebekörpers 11 in Lage gehalten ist. Am Flansch 9 ist ein Dichtkörper 12 angebracht, der mit einer Türscheibe 13 oder einem Türrahmen zusammenwirkt. Die energieabsorbierende Verkleidung 4 umfaßt zumindest ein energieaufnehmendes Element 14 und ein dem Fahrzeuginsassen zugekehrtes Verkleidungsteil 15.

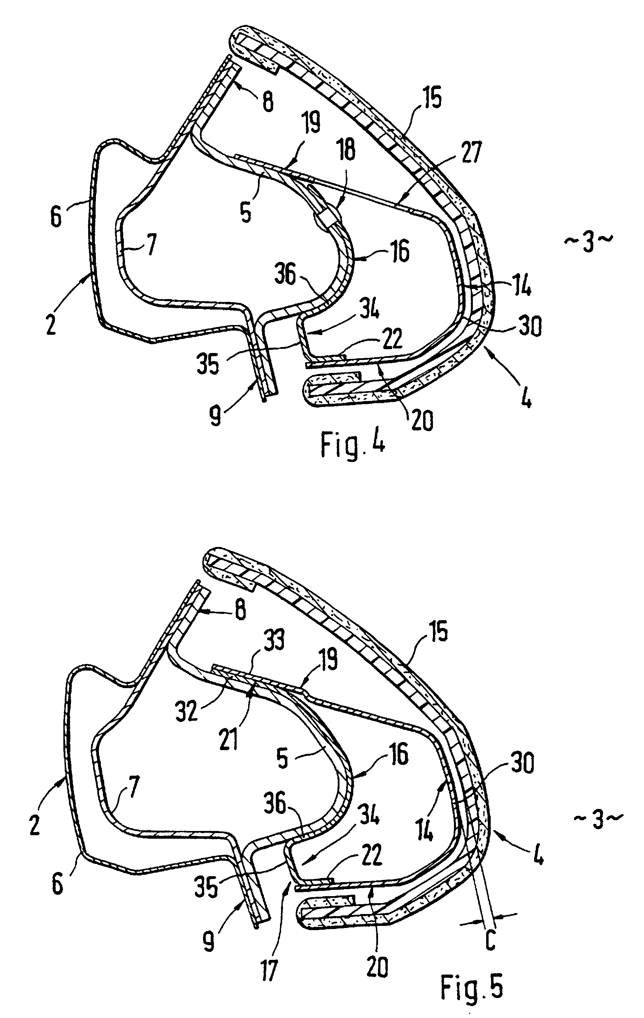

Erfindungsgemäß ist das im Querschnitt gesehen etwa U-förmig profilierte, energieaufnehmende Element 14 auf der der Aufbausäule 2 zugekehrten Seite zumindest bereichsweise mit einer profilierten Halteschiene 16 verbunden, die abschnittsweise formschlüssig an der Aufbausäule 2 anliegt und mit dieser örtlich fest verbunden ist. Die Halteschiene 16 und das energieaufnehmende Element 14 bilden eine vorgefertigte Baueinheit 17, die am Innenblech 5 der Aufbausäule 2 befestigbar ist. Dies kann durch Nieten, Schrauben, Schweißen oder dergleichen erfolgen. In Fig. 4 ist beispielsweise ein Niet 18 zur Halterung der Baueinheit 17 an der Aufbausäule 2 dargestellt. Sowohl die Halteschiene 16 als auch das energieaufnehmende Element 14 der Baueinheit 17 können direkt an der Aufbausäule 2 befestigt sein.

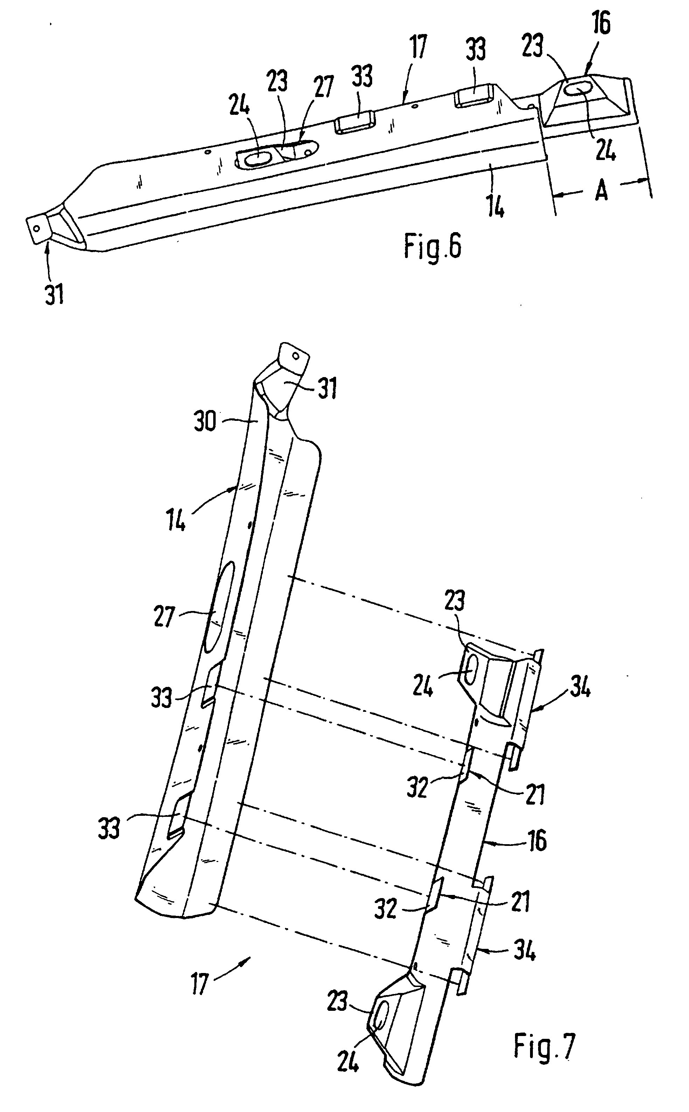

Das energieaufnehmende Element 14 weist über seine gesamte Längserstreckung zwei beabstandete Schenkel 19, 20 auf, wobei die freien Enden der beiden Schenkel 19, 20 örtlich mit gleichgerichteten innenliegenden Flanschen 21, 22 der Halteschiene 16 fest verbunden sind (Fig. 5). Die Flansche 21, 22 der Halteschiene 16 sind gemäß Fig. 7 lediglich örtlich vorgesehen. Die Flansche 21 der Halteschiene 16 werden durch vorstehende rechteckförmige Zungen 32 gebildet, die an der Innenseite von korrespondierenden Ausprägungen 33 des Schenkels 19 des energieaufnehmenden Elements 14 anliegen und dort befestigt sind. Im Ausführungsbeispiel sind zwei beabstandete Zungen 32 an der Halteschiene 16 vorgesehen. Die Flansche 22 der Halteschiene 16 bilden jeweils außenliegende Stege von U-förmigen Anformungen 34, wobei an der Halteschiene 16 ebenfalls zwei beabstandete Anformungen 34 vorgesehen sind. Zwischen den U-förmigen Anformungen 34 ist die Halteschiene 16 freigeschnitten. Unterhalb der untenliegenden Anformung 34 ist die Halteschiene 16 ebenfalls freigeschnitten. Jede U-förmige Anformung 34 setzt sich gemäß Fig. 5 aus dem den Flansch 22 bildenden äußeren Steg, einem Verbindungssteg 35 und einem inneren Steg 36 zusammen, wobei der Steg 36 einstückig an die Kontur der Halteschiene 16 angeschlossen ist. Die Verbindung zwischen der Halteschiene 16 und den Schenkeln 19, 20 des energieaufnehmenden Elements 14 erfolgt im Ausführungsbeispiel durch mehrere Punktschweißungen. Generell kann die Verbindung von Halteschiene 16 und energieaufnehmendem Element 14 durch Schweißen, Löten, Kleben, Umformen, Durchsatzfügen oder dergleichen erfolgen. Die Halteschiene 16 und das energieaufnehmende Element 14 können jeweils aus Stahl- oder Aluminiumblech hergestellt sein.

Im Ausführungsbeispiel ist die Halteschiene 16 aus Stahlblech und das energieaufnehmende Element 14 aus Aluminiumblech gefertigt, wobei die Halteschiene 16 eine größere Wanddicke aufweist als das energieaufnehmende Element. Die Wanddicke beider Teile liegt etwa zwischen 0,5 und 2,0 mm und wird empirisch ermittelt. Die Halteschiene 16 überragt entsprechend Fig. 2 das energieaufnehmende Element 14 nach unten hin um ein Maß A. Nach oben hin steht das energieaufnehmende Element 14 gegenüber der Halteschiene 16 um ein Maß B vor. Das dem Fahrzeuginsassen zugekehrte Verkleidungsteil 15 verläuft durchgehend mit Abstand C zum energieaufnehmenden Element 14 und ist gemäß einer ersten Ausführungsform lediglich örtlich an der Halteschiene 16 befestigt (Fig. 3). Hierzu ist an beiden Enden der langgestreckten Halteschiene 16 auf der dem Schenkel 20 des energieaufnehmenden Elements 14 zugekehrten Seite jeweils ein hochgezogener Tragflansch 23 vorgesehen, wobei an jedem Tragflansch 23 ein Langloch 24 ausgebildet ist, in das eine federnde Halteklammer 25 eingesetzt ist. In jede Halteklammer 25 ist ein freies Ende eines Befestigungssteges 26 des Verkleidungsteiles 15 einsteckbar. Der untere Tragflansch 23 der Halteschiene 16 erstreckt sich außerhalb des energieaufnehmenden Elements 14, so daß das Verkleidungsteil 15 in einfacher Weise an der Halteschiene 16 festlegbar ist (Fig. 2).

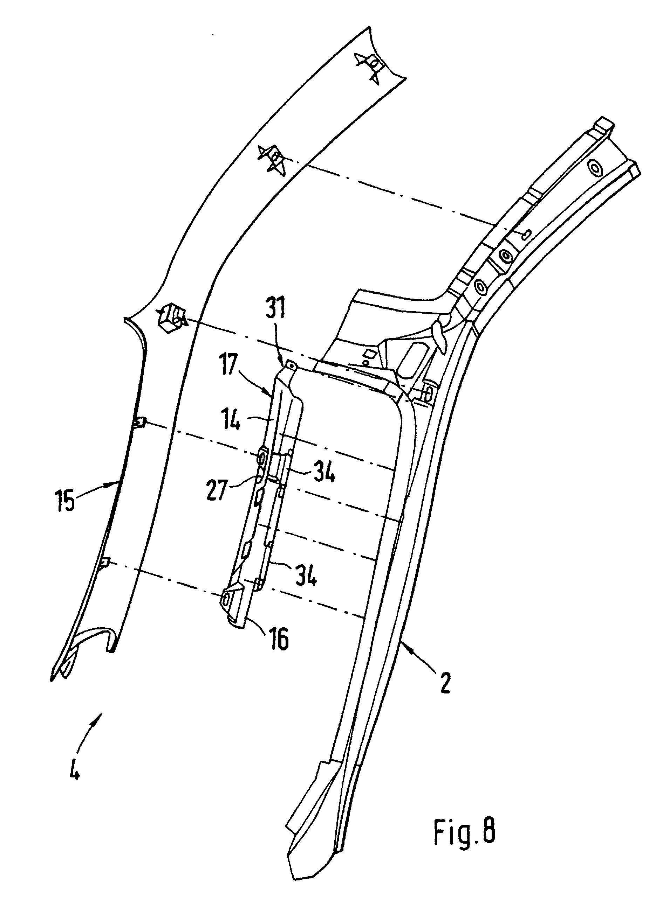

Zur Befestigung der Halteschiene 16 an der Aufbausäule 2 und zur Halterung des Verkleidungsteils 15 am oberen Tragflansch 23 der Halteschiene 16 weist das energieaufnehmende Element 14 in diesem Bereich eine längliche Schlitzöffnung 27 auf. Der obere Tragflansch 23 durchdringt die längliche Schlitzöffnung 27 des energieaufnehmenden Elementes 14 (Fig. 3). Die Befestigungsstege 26 am Verkleidungsteil 15 sind lediglich örtlich im Bereich der beiden beabstandeten Tragflansche 23 der Halteschiene 16 ausgebildet, wobei jeder Befestigungssteg 26 etwa senkrecht zum Tragflansch 23 ausgerichtet ist. Am freien Ende jedes Befestigungssteges 26 ist zumindest eine seitlich vorstehende Haltenase 28 ausgebildet, die eine Haltezunge 29 der Halteklammer 25 hintergreift. Der zwischen den endseitigen Schenkeln 19, 20 sich erstreckende Wandabschnitt 30 des energieaufnehmenden Elements 14 verläuft mit Abstand C zum vorgelagerten Verkleidungsteil 15. Zur Vermeidung von Geräuschbildung im Fahrbetrieb können zwischen Verkleidung 15 und Element 14 örtlich Filzzwischenlagen vorgesehen werden (nicht näher dargestellt). Gemäß den Fig. 2, 7 und 8 ist zur zusätzlichen Befestigung des Bauteils 17 am oberen Ende des energieaufnehmenden Elements 14 ein abgewinkelter Halter 31 vorgesehen, der am Innenblech 5 der Aufbausäule 2 festlegbar ist. Dies kann durch Nieten oder Schrauben erfolgen. Der Halter 31 ist einstückig mit dem Wandabschnitt 30 des energieaufnehmenden Elements 14 ausgebildet.

Im Ausführungsbeispiel ist die erfindungsgemäße energieabsorbierende Verkleidung 4 an einer A-Säule vorgesehen. Sie könnte jedoch auch an einer B-, C-, D-Säule oder an seitlichen Dachlängsholmen eines Fahrzeuges angeordnet sein.

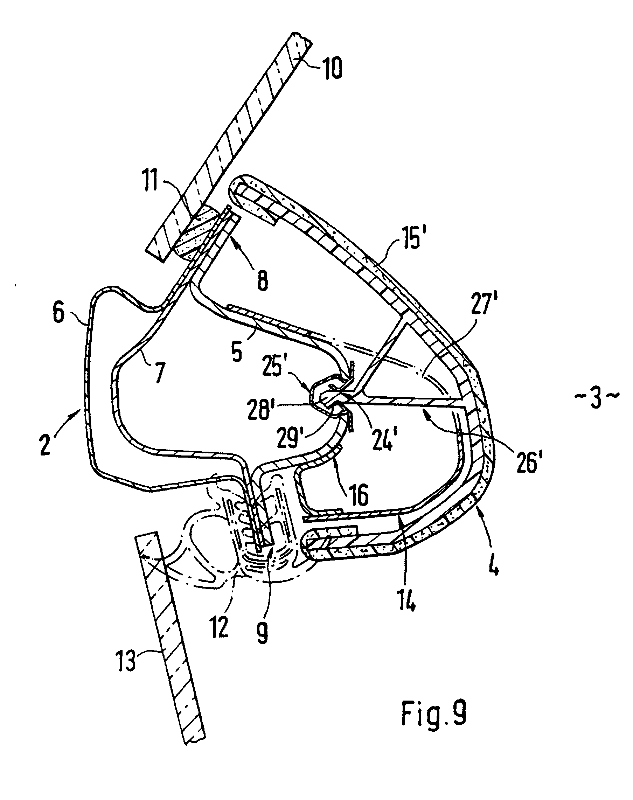

Fig. 9 zeigt eine zweite Ausführungsform zur Befestigung eines Verkleidungsteils 15'. Bei dieser Anordnung ist das Verkleidungsteil 15' örtlich an der Aufbausäule 2 befestigt. Ein Befestigungssteg 26' des Verkleidungsteiles 15 durchdringt eine längliche Schlitzöffnung 27' des energieaufnehmenden Elements 14. Der Befestigungssteg 26' ist etwa senkrecht zur Aufbausäule 2 im Bereich der Montagefläche ausgerichtet. Gemäß Fig. 9 ist in ein Langloch 24' des Innenblechs 5 der Aufbausäule 2 eine federnde Halteklammer 25' eingesetzt, wobei eine seitlich vorstehende Haltenase 28' des Befestigungssteges 26' eine Haltezunge 29' der Halteklammer 25' hintergreift.

## Patentansprüche

1. Energieabsorbierende Verkleidung (4) für eine Aufbausäule (2) eines Kraftfahrzeuges, wobei die Verkleidung an einem im Fahrgastraum (3) liegenden Bereich der Aufbausäule (2) anbringbar ist und zumindest ein Verkleidungsteil (15) und ein zwischen Verkleidungsteil (15) und Aufbausäule (2) angeordnetes energieaufnehmendes Element (14) umfaßt, welches durch einen hohlraumbegrenzenden U-förmig profilierten Träger aus Metallblech gebildet wird, wobei das energieaufnehmende Element (14) auf der der Aufbausäule (2) zugekehrten Seite zumindest in einem Teilbereich seiner Längserstreckung von einer profilierten Halteschiene (16) getragen ist, die abschnittsweise formschlüssig an der Aufbausäule (2) anliegbar und mit dieser örtlich fest verbindbar ist, **dadurch gekennzeichnet, daß** das energieaufnehmende Element (14) und die Halteschiene (16) eine vorgefertigte Baueinheit (17) bilden, die am Innenblech (5) der Aufbausäule (2) befestigbar ist, wobei die freien Enden von beabstandet angeordneten Schenkeln (19, 20) des energieaufnehmenden Elements (14) örtlich mit gleichgerichteten innenliegenden Flanschen (21, 22) der Halteschiene (16) verbunden sind.

2. Energieabsorbierende Verkleidung nach Anspruch 1, **dadurch gekennzeichnet, daß** die Halteschiene (16) und das energieaufnehmende Element (14) über Nietverbindungen, Schweiß- oder Schraubverbindungen an der Aufbausäule (2) befestigt sind.

3. Energieabsorbierende Verkleidung nach einem oder mehreren der vorangegangenen Ansprüche, **dadurch gekennzeichnet, daß** die Halteschiene (16) aus Aluminium- oder Stahlblech und das energieaufnehmende Element (14) aus Aluminium- oder Stahlblech gefertigt sind, wobei die Dicke der Metallbleche etwa zwischen 0,5 und 2,0 mm beträgt.

4. Energieabsorbierende Verkleidung nach einem oder mehreren der vorangegangenen Ansprüche, **dadurch gekennzeichnet, daß** die Halteschiene (16) das profilierte energieaufnehmende Element (14) nach unten hin um ein Maß (A) überragt

5. Energieabsorbierende Verkleidung nach einem oder mehreren der vorangegangenen Ansprüche, **dadurch gekennzeichnet, daß** das energieaufnehmende Element (14) die Halteschiene (16) nach oben hin um ein Maß (B) überragt.

6. Energieabsorbende Verkleidung nach einem oder mehreren der vorangegangenen Ansprüche, **dadurch gekennzeichnet, daß** das vorgelagerte mit Abstand zum energieaufnehmenden Element (14) angeordnete Verkleidungsteil (15) örtlich an der Halteschiene (16) befestigt ist.

7. Energieabsorbende Verkleidung nach einem oder mehreren der vorangegangenen Ansprüche, **dadurch gekennzeichnet, daß** das vorgelagerte, mit Abstand zum energieaufnehmenden Element (14) angeordnete Verkleidungsteil (15') örtlich an der Aufbausäule (2) befestigt ist.

8. Energieabsorbierende Verkleidung nach einem oder mehreren der vorangegangenen Ansprüche, **dadurch gekennzeichnet, daß** am energieaufnehmenden Element (14) zumindest eine längliche Schlitzöffnung (27, 27') ausgebildet ist, um die Halteschiene (16) an der Aufbausäule (2) und das Verkleidungsteil (15, 15') an der Halteschiene (16) oder an der Aufbausäule (2) zu befestigen.

9. Energieabsorbierende Verkleidung nach einem oder mehreren der vorangegangenen Ansprüche, **dadurch gekennzeichnet, daß** an beiden Enden der langgestreckten Halteschiene (16) je ein Tragflansch (23) mit einem Langloch (24) ausgebildet ist, in das eine federnde Halteklammer (25) eingesetzt ist, wobei in jede Halteklammer (25) ein freies Ende eines Befestigungssteges (26) des Verkleidungsteils (15) einsetzbar ist.

10. Energieabsorbierende Verkleidung nach einem oder mehreren der vorangegangenen Ansprüche, **dadurch gekennzeichnet, daß** der obere Tragflansch (23) der Halteschiene (16) durch die längliche Schlitzöffnung (27) des energieaufnehmenden Elements (14) hindurchragt.

11. Energieabsorbierende Verkleidung nach einem oder mehreren der vorangegangenen Ansprüche, **dadurch gekennzeichnet, daß** die Befestigungsstege (26) des Verkleidungsteiles (15) etwa senkrecht zum abgestellten Tragflansch (23) der Halteschiene (16) ausgerichtet sind.

12. Energieabsorbierende Verkleidung nach einem oder mehreren der vorangegangenen Ansprüche, **dadurch gekennzeichnet, daß** ein durch eine längliche Schlitzöffnung (27') des energieaufnehmenden Elements (14) hindurchragender Befestigungssteg (26') des Verkleidungsteiles 15') in eine Halteklammer (25') einsteckbar ist, wobei die in ein Langloch (24') des Innenblechs (5) der Aufbausäule (2) eingesetzte Halteklammer (25') eine Haltezunge (29') aufweist, die von einer vorstehenden Haltenase (28') des Befestigungssteges (26') bei montiertem Verkleidungsteil (15') hintergriffen wird.

13. Energieabsorbierende Verkleidung nach einem oder mehreren der vorangegangenen Ansprüche, **dadurch gekennzeichnet, daß** jeder Befestigungssteg (26, 26') an seinem freien Ende eine örtlich vorstehende Haltenase (28, 28') aufweist, die eine Haltezunge (29, 29') der Halteklammer (25, 25') hintergreift.

14. Energieabsorbierende Verkleidung nach einem oder mehreren der vorangegangenen Ansprüche, **dadurch gekennzeichnet, daß** zwischen Verkleidungsteil (15, 15') und energieaufnehmendem Element (14) örtlich Filzzwischenlagen zur Vermeidung von Klappergeräuschen zwischengeschaltet sind.

## Claims

1. Energy-absorbing cladding (4) for a body pillar (2) of a motor vehicle, which can be applied to a region of the body pillar (2) positioned within the passenger compartment (3) and which comprises at least one cladding part (15) and an energy-absorbing member (14) positioned between the cladding part (15) and the body pillar (2), which member is formed of a hollow chamber-delimiting U-shaped profiled carrier made of sheet metal, the energy-absorbing member (14) being borne - at least in a partial region of its longitudinal dimension - by a profiled retaining rail (16) on the side facing the body pillar (2), which retaining rail can, in portions, lie adjacent to the body pillar (2) in a positive fit and is locally rigidly connectable therewith, **characterised in that** the energy-absorbing member (14) and the retaining rail (16) form a prior-manufactured structural unit (17) which is attachable on the inner panel (5) of the body pillar (2), in which arrangement the free ends of mutually-distanced limbs (19, 20) of the energy-absorbing member (14) are locally connected to similarly aligned, internally positioned flanges (21, 22) of the retaining rail (16).

2. Energy-absorbing cladding according to Claim 1, **characterised in that** the retaining rail (16) and the energy-absorbing member (14) are attached to the body pillar (2) by means of riveted joints, weld joints or bolted connections.

3. Energy-absorbing cladding according to one or more of the preceding claims, **characterised in that** the retaining rail (16) is made of sheet aluminium or sheet steel, and the energy-absorbing member (14) from sheet aluminium or sheet steel , the thickness of the sheet metal being roughly within the range 0.5 to 2.0 mm.

4. Energy-absorbing cladding according to one or more of the preceding claims, **characterised in that** the retaining rail (16) projects downwards from the profiled energy-absorbing member (14) by a dimension (A).

5. Energy-absorbing cladding according to one or more of the preceding claims, **characterised in that** the energy-absorbing member (14) projects upwards from the retaining rail (16) by a dimension (B).

6. Energy-absorbing cladding according to one or more of the preceding claims, **characterised in that** the cladding part (15) positioned in front of and at a distance from the energy-absorbing member (14) is locally attached on the retaining rail (16).

7. Energy-absorbing cladding according to one or more of the preceding claims, **characterised in that** the cladding part (15') positioned in front of and at a distance from the energy-absorbing member (14) is locally attached on the body pillar (2).

8. Energy-absorbing cladding according to one or more of the preceding claims, **characterised in that** at least one elongated slot opening (27, 27') is formed on the energy-absorbing member (14) for the purpose of attaching the retaining rail (16) to the body pillar (2) and the cladding part (15, 15') to the retaining rail (16) or to the body pillar (2).

9. Energy-absorbing cladding according to one or more of the preceding claims, **characterised in that** a bearing flange (23) with an elongated hole (24) is formed on each of the two ends of the longitudinally extended retaining rail (16), into which hole an elastic retaining clip (25) is inserted, a free end of an attachment member (26) of the cladding part (15) being insertable into each retaining clip (25).

10. Energy-absorbing cladding according to one or more of the preceding claims, **characterised in that** the upper bearing flange (23) of the retaining rail (16) projects through the elongated slot opening (27) of the energy-absorbing member (14).

11. Energy-absorbing cladding according to one or more of the preceding claims, **characterised in that** the attachment members (26) of the cladding part (15) are aligned roughly perpendicularly to the offset bearing flange (23).

12. Energy-absorbing cladding according to one or more of the preceding claims, **characterised in that** an attachment member (26') of the cladding part (15') projecting through an elongated slot opening (27') of the energy-absorbing member (14) is insertable into a retaining clip (25'), the retaining clip (25') inserted into an elongated hole (24') in the inner panel (5) of the body pillar (2) having a retaining tongue (29'), which is engaged by a projecting retaining nose (28') of the attachment member (26') when the cladding part (15') is in the mounted state.

13. Energy-absorbing cladding according to one or more of the preceding claims, **characterised in that** each attachment member (26, 26') has, at its free end, a locally projecting retaining nose (28, 28') which engages behind a retaining tongue (29, 29') of the retaining clip (25, 25').

14. Energy-absorbing cladding according to one or more of the preceding claims, **characterised in that** intermediate layers of felt are locally interposed between the cladding part (15, 15') and the energy-absorbing member (14) to prevent rattling.

## Revendications

1. Revêtement (4) absorbant l'énergie pour une poutrelle (2) d'un véhicule automobile, le revêtement pouvant être fixé sur une zone de la poutrelle (2) située à l'intérieur du compartiment passagers (3) et comprenant au moins un élément de revêtement (15) et un élément (14) absorbant l'énergie disposé entre l'élément de revêtement (15) et la poutrelle (2), élément formé à partir d'un support profilé en tôle métallique en forme de U délimitant un compartiment creux, l'élément (14) absorbant l'énergie étant supporté sur la partie faisant face à la poutrelle (2), au moins sur une zone partielle de son extension longitudinale, par un rail de maintien (16) profilé attenant partiellement et par complémentarité de forme à la poutrelle (2) et pouvant être localement fixé à celle-ci, **caractérisé en ce que** l'élément (14) absorbant l'énergie et le rail de maintien (16) forment un ensemble préfabriqué (17) pouvant être fixé sur la tôle intérieure (5) de la poutrelle (2), les extrémités libres des branches (19, 20) de l'élément (14) absorbant l'énergie disposées à distance, étant reliées localement à des brides (21, 22) intérieures du rail de maintien (16) allant dans la même direction.

2. Revêtement absorbant l'énergie selon la revendication 1, **caractérisé en ce que** le rail de maintien (16) et l'élément (14) absorbant l'énergie sont fixés sur la poutrelle (2) à l'aide de raccords rivetés, soudés ou vissés.

3. Revêtement absorbant l'énergie selon l'une ou plusieurs des revendications précédentes, **caractérisé en ce que** le rail de maintien (16) est en tôle d'aluminium ou d'acier et l'élément (14) absorbant l'énergie est en tôle d'aluminium ou d'acier, l'épaisseur des tôles métalliques étant comprise entre 0,5 et 2,0 mm environ.

4. Revêtement absorbant l'énergie selon l'une ou plusieurs des revendications précédentes, **caractérisé en ce que** le rail de maintien (16) dépasse de l'élément (14) profilé absorbant l'énergie vers le bas d'une valeur (A).

5. Revêtement absorbant l'énergie selon l'une ou plusieurs des revendications précédentes, **caractérisé en ce que** l'élément (14) absorbant l'énergie dépasse du rail de maintien (16) vers le haut d'une valeur (B).

6. Revêtement absorbant l'énergie selon l'une ou plusieurs des revendications précédentes, **caractérisé en ce que** l'élément de revêtement (15) en amont disposé à distance de l'élément (14) absorbant l'énergie est localement fixé au rail de maintien (16).

7. Revêtement absorbant l'énergie selon l'une ou plusieurs des revendications précédentes, **caractérisé en ce que** l'élément de revêtement (15') en amont disposé à distance de l'élément (14) absorbant l'énergie est localement fixé à la poutrelle (2).

8. Revêtement absorbant l'énergie selon l'une ou plusieurs des revendications précédentes, **caractérisé en ce que** sur l'élément (14) absorbant l'énergie au moins un orifice fendu oblong (27, 27') est formé pour fixer le rail de maintien (16) sur la poutrelle (2) et l'élément de revêtement (15, 15') sur le rail de maintien (16) ou sur la poutrelle (2).

9. Revêtement absorbant l'énergie selon l'une ou plusieurs des revendications précédentes, **caractérisé en ce qu'**aux deux extrémités du rail de maintien (16) allongé respectivement une bride de support (23) présentant un trou oblong (24) est formée, dans lequel une clavette de maintien élastique (25) est insérée, chaque clavette de maintien (25) pouvant recevoir une extrémité libre d'une entretoise de fixation (26) de l'élément de revêtement (15).

10. Revêtement absorbant l'énergie selon l'une ou plusieurs des revendications précédentes, **caractérisé en ce que** la bride de support supérieure (23) du rail de maintien (16) traverse l'orifice fendu oblong (27) de l'élément (14) absorbant l'énergie.

11. Revêtement absorbant l'énergie selon l'une ou plusieurs des revendications précédentes, **caractérisé en ce que** les entretoises de fixation (26) de l'élément de revêtement (15) sont orientées à peu près verticalement à la bride de support (23) du rail de maintien (16).

12. Revêtement absorbant l'énergie selon l'une ou plusieurs des revendications précédentes, **caractérisé en ce qu'**une entretoise de fixation (26') de l'élément de revêtement (15') traversant un orifice fendu oblong (27') de l'élément (14) absorbant l'énergie peut être emboîtée dans une clavette de maintien (25'), la clavette de maintien (25') insérée dans un trou oblong (24') de la tôle intérieure (5) de la poutrelle (2) présentant une languette de maintien (29'), sur laquelle est encliqueté un crochet de fixation (28') saillant de l'entretoise de fixation (26') lorsque l'élément de revêtement (15') est monté.

13. Revêtement absorbant l'énergie selon l'une ou plusieurs des revendications précédentes, **caractérisé en ce que** chaque entretoise de fixation (26, 26'), sur son extrémité libre, présente un crochet de fixation (28, 28') localement saillant, qui encliquette une languette de maintien (29, 29') de la clavette de maintien (25, 25').

14. Revêtement absorbant l'énergie selon l'une ou plusieurs des revendications précédentes, **caractérisé en ce qu'**entre l'élément de revêtement (15, 15') et l'élément (14) absorbant l'énergie, des inserts en feutre sont localement insérés pour éviter des bruits de cliquetis.
